# EUROPÄISCHE PATENTSCHRIFT

(11) **EP 2 479 449 B1**
(45) Veröffentlichungstag und Bekanntmachung des Hinweises auf die Patenterteilung: **31.07.2013**
(21) Anmeldenummer: 11151289.3
(22) Anmeldetag: 18.01.2011
(51) Int. Cl.: F16D 33/08

(54) **Hydrodynamische Kupplung mit mehrstufiger Vorkammer**
Hydrodynamic coupling with multi-stage pre-chamber
Embrayage hydrodynamique doté d'une préchambre à plusieurs niveaux

(43) Veröffentlichungstag der Anmeldung: 25.07.2012
(73) Patentinhaber: Siemens Aktiengesellschaft, 80333 München (DE)
(72) Erfinder: Gödde, Peter, 46286, Dorsten (DE); Mallmann, Hans-Jochen, 48653, Coesfeld (DE)

(56) Entgegenhaltungen:
- EP-A2- 1 013 954
- WO-A1-03/054408
- DD-A1- 270 744
- DE-A1- 19 802 524
- GB-A- 2 159 252

## Beschreibung

Die vorliegende Erfindung betrifft eine hydrodynamische Kupplung mit einem beschaufelten Außenrad und einer Schale, die miteinander einen Arbeitsraum bilden und um eine Drehachse gemeinsam rotierbar angeordnet sind, einem innerhalb des Arbeitsraums vorgesehenen beschaufelten Innenrad, das relativ zu dem Außenrad und der Schale rotierbar um die Drehachse angeordnet ist, sowie wenigstens einer Vorkammer, die drehfest mit dem Außenrad verbunden ist, wobei ein radial äußerer Bereich der Vorkammer über einen Zulaufkanal und ein radial innerer Bereich der Vorkammer über einen Rücklaufkanal mit dem Arbeitsraum verbunden sind.

Eine solche hydrodynamische Kupplung ist beispielsweise in der GB-A-2 159 252 beschrieben.

Hydrodynamische Kupplungen, auch Strömungskupplungen, Turbokupplungen oder Föttinger-Kupplungen genannt, sind allgemein bekannt und werden beispielsweise als Anlauf- und Überlastungskupplung zur Übertragung eines Drehmoments von einer Kraft- auf eine Arbeitsmaschine eingesetzt. Eine solche hydrodynamische Kupplung besteht vereinfacht aus einem beschaufelten Außenrad, dem sogenannten Pumpenrad, das zusammen mit einer Schale ein Gehäuse bildet und drehfest mit einer Antriebswelle verbunden ist. Das Gehäuse umschließt einen Arbeitsraum und ist zumindest teilweise mit einer öl-oder wasserhaltigen Arbeitsflüssigkeit gefüllt. Innerhalb des Arbeitsraums ist ein beschaufeltes Innenrad, das sogenannte Turbinenrad, angeordnet, das mit einer koaxial zu der Antriebswelle gelagerten Abtriebswelle drehfest verbunden ist. Alternativ ist es möglich, die hydrodynamischen Kupplungen mit einem Innenantrieb zu versehen, bei denen das innenliegende Rad das Pumpenrad und das Außenrad das Turbinenrad bildet.

Im Betrieb versetzt eine an die Antriebswelle angeschlossene Kraftmaschine das Pumpenrad in Rotation, das die mechanische Energie in kinetische Strömungsenergie der Arbeitsflüssigkeit umwandelt. Im Turbinenrad wird diese Strömungsenergie wieder in mechanische Energie umgesetzt, die das Turbinenrad antreibt. Um die zu der Drehmomentübertragung notwendige Kreislaufströmung der Arbeitsflüssigkeit in dem Arbeitsraum zu erzeugen, ist ein Drehzahlunterschied, der sogenannte Schlupf, zwischen dem Pumpen- und dem Turbinenrad notwendig.

Da hydrodynamische Kupplungen das Anfahrdrehmoment in einem mechanischen Antriebsstrang begrenzen und drehschwingungsdämpfend sind, werden sie vor allem in Antrieben für Förderanlagen, wie zum Beispiel Gurtbandförderer, Becherwerke und Kettenförderer sowie für Schaufelradantriebe, Brecher, Rollenpressen, Mischer, Großventilatoren, Kesselspeisepumpen, Großkompressoren, Zentrifugen und in Hilfsantrieben für Mühlen eingesetzt. Durch das materialschonende Anfahrverhalten erhöhen sie vor allem die Lebensdauer angeschlossener Maschinen.

Aus der DE 33 18 462 A1 ist eine hydrodynamische Kupplung der eingangs genannten Art bekannt. Bei dieser Kupplung ist an dem Gehäuse antriebsseitig eine Vorkammer ausgebildet, die über einen radial inneren Rücklaufkanal und einen radial äußeren Zulaufkanal mit dem Arbeitsraum verbunden ist. Der Strömungsquerschnitt des Zulaufkanals ist durch ein elektronisches Stellglied einstellbar, um den Volumenstrom der Arbeitsflüssigkeit von der Vorkammer über den Zulaufkanal in den Arbeitsraum verändern zu können. Zur Steuerung des elektronischen Stellglieds werden Mess- und Auswerteeinheiten benötigt.

Im Stillstand ruht die Arbeitsflüssigkeit statisch in der hydrodynamischen Kupplung und füllt den unteren Bereich des Arbeitsraumes sowie den unteren Bereich der Vorkammer. Über die Antriebswelle wird das Pumpenrad in Rotation versetzt. Die mit zunehmender Drehzahl steigenden Zentrifugalkräfte drücken die Arbeitsflüssigkeit an die radiale Außenwand des Arbeitsraumes. Zudem strömt die sich in der Vorkammer befindliche Arbeitsflüssigkeit über den Zulaufkanal zeitlich verzögert in den Arbeitsraum nach. Der geringe Füllstand der Arbeitsflüssigkeit in dem Arbeitsraum in Anfahrzustand ermöglicht, dass die hydrodynamische Kupplung mit einem niedrigeren Anfahrdrehmoment anfährt.

An dieser Ausgestaltung wird zum Teil als nachteilig empfunden, dass die hydrodynamische Kupplung aufgrund der elektronischen Bauteile aufwendig und teuer herzustellen ist. Zudem sind die elektronischen Bauteile störanfällig und müssen mit elektronischem Strom versorgt werden.

Aufgabe der vorliegenden Erfindung ist es daher, eine möglichst wartungsfreie hydrodynamische Kupplung bereitzustellen, die ein geeignetes Anfahrdrehmoment, das keinen hohen Maximalwert aufweist und zudem den Anfahrvorgang zeitlich nicht zu stark streckt, erreicht, eine kompakte Bauweise aufweist sowie einfach und preiswert herzustellen ist.

Diese Aufgabe ist erfindungsgemäß bei einer hydrodynamischen Kupplung der eingangs genannten Art dadurch gelöst, dass die wenigstens eine Vorkammer über wenigstens zwei radial zueinander beabstandete Zulaufkanäle und/oder über wenigstens einen im Wesentlichen radial verlaufenden, schlitzförmig ausgebildeten Zulaufkanal mit dem Arbeitsraum verbunden ist.

Der Erfindung liegt somit die Überlegung zugrunde, den Volumenstrom der Arbeitsflüssigkeit von der Vorkammer in den Arbeitsraum in Abhängigkeit von dem Füllstand der Arbeitsflüssigkeit in der Vorkammer zu verändern.

Hierzu schlägt die Erfindung zunächst vor, die wenigstens eine Vorkammer über wenigstens zwei radial zueinander beabstandete Zulaufkanäle mit dem Arbeitsraum zu verbinden. Im Betrieb wird die Arbeitsflüssigkeit aufgrund der einwirkenden Zentrifugalkräfte an die radiale Außenwand der Vorkammer gedrückt. Zu Beginn liegt der Flüssigkeitspegel in der Vorkammer oberhalb der Zulaufkanäle, so dass die Arbeitsflüssigkeit über beide Zulaufkanäle in den Arbeitsraum strömt. Wenn der Flüssigkeitspegel in der Vorkammer unterhalb des radial inneren Zulaufkanals sinkt, strömt die Arbeitsflüssigkeit nur noch über den radial äußeren Zulaufkanal in den Arbeitsraum. Es ergibt sich somit im Anfahrzustand ein hoher Volumenstrom der Arbeitsflüssigkeit von der Vorkammer in den Arbeitsraum, der im Betrieb mit sinkendem Flüssigkeitspegel in der Vorkammer abfällt.

Alternativ oder zusätzlich schlägt die Erfindung vor, die wenigstens eine Vorkammer über wenigstens einen im Wesentlichen radial verlaufenden, schlitzförmig ausgebildeten Zulaufkanal mit dem Arbeitsraum zu verbinden. Im Betrieb wird die Arbeitsflüssigkeit aufgrund der einwirkenden Zentrifugalkräfte an die radiale Außenwand der Vorkammer gedrückt. Zu Beginn liegt der Flüssigkeitspegel in der Vorkammer oberhalb des schlitzförmigen Zulaufkanals, so dass der Zulaufkanal von der Arbeitsflüssigkeit durchströmt wird. Beim Anfahrvorgang sinkt der Flüssigkeitspegel in der Vorkammer ab. Wenn der Flüssigkeitspegel in der Vorkammer unterhalb des radial inneren Randes des schlitzförmigen Zulaufkanals fällt, verringert sich der durchströmte Querschnitt des Zulaufkanals. In Folge dessen reduziert sich der Volumenstrom der Arbeitsflüssigkeit von der Vorkammer in den Arbeitsraum. Mit weiter sinkendem Flüssigkeitspegel erhöht sich die Drosselwirkung des Zulaufkanals.

Zusammenfassend fährt durch das zeitlich verzögerte Nachströmen der Arbeitsflüssigkeit von der Vorkammer in den Arbeitsraum eine Arbeitsmaschine mit einem ausreichend hohen Anfahrdrehmoment ohne hohe Maximalwerte und damit einer stark entlasteten Kraftmaschine an. Durch den zunächst hohen Volumenstrom der Arbeitsflüssigkeit im Anfahrzustand von der Vorkammer in den Arbeitsraum kann auch ein großes Lastmoment, das zum Beispiel als Losbrechmoment bereitgestellt werden muss, durch den Drehmomentanstieg der hydrodynamischen Kupplung überwunden werden. Mit steigender Drehzahl sinkt der Flüssigkeitspegel zeitabhängig in der Vorkammer, wodurch der Volumenstrom der Arbeitsflüssigkeit von der Vorkammer in den Arbeitsraum abnimmt. Darüber hinaus lässt sich der Verlauf der Drehmomentkennlinie durch die Veränderung der Anzahl der radial zueinander beabstandeten Zulaufkanäle und durch die Wahl der Strömungsquerschnitte, die jede geometrische Form, insbesondere eine runde, rechteckige oder schlitzförmige, annehmen können, sehr genau bestimmen.

In bevorzugter Weise können das Außenrad mit einer Antriebswelle und das Innenrad mit einer Abtriebswelle drehfest verbunden sein. Das Nachströmverhalten der Arbeitsflüssigkeit von der Vorkammer in den Arbeitsraum im Anfahrvorgang kann bei dem sogenannten Außenradantrieb, d.h. das Außenrad arbeitet als Pumpenrad und das Innenrad als Turbinenrad, im Vergleich zu einem Innenradantrieb besser bestimmt werden.

In weiterer Ausgestaltung der Erfindung ist vorgesehen, dass radial zueinander beabstandete Zulaufkanäle vorgesehen sind, wobei jeweils ein radial weiter innenliegender Zulaufkanal einen größeren Strömungsquerschnitt als ein radial weiter außenliegender Zulaufkanal aufweist. Dadurch wird die Drosselwirkung mit sinkendem Flüssigkeitspegel in der Vorkammer verstärkt.

Bei einer Weiterbildung der erfindungsgemäßen hydrodynamischen Kupplung ist ein schlitzförmig ausgebildeter Zulaufkanal vorgesehen, bei dem das Verhältnis zwischen Höhe und mittlerer Breite 4:1 oder mehr beträgt. Ab dem Verhältnis von 4:1 weist der schlitzförmig ausgebildete Zulaufkanal gleich gute Eigenschaften wie wenigstens zwei radial zueinander beabstandete Zulaufkanäle auf.

Gemäß einer weiteren Ausgestaltung der vorliegenden Erfindung weist der wenigstens ein schlitzförmig ausgebildeter Zulaufkanal eine variable Breite auf, die in bevorzugter Weise mit abnehmendem Abstand zu der Drehachse insbesondere kontinuierlich zunimmt. Dadurch ergibt sich mit sinkendem Flüssigkeitspegel ein kontinuierlich abnehmender Volumenstrom der Arbeitsflüssigkeit von der Vorkammer über den Zulaufkanal in den Arbeitsraum.

Damit die Arbeitsflüssigkeit gleichmäßig in den Arbeitsraum strömt, kann die wenigstens eine Vorkammer über mehrere Zulaufkanäle mit dem Arbeitsraum verbunden sein, die in einem gleichen Abstand von der Drehachse angeordnet sind.

Des Weiteren können mehrere in Umfangsrichtung voneinander getrennte Vorkammern vorgesehen sein. In bevorzugter Weise weist die Vorkammer jedoch einen ringförmigen Innenraum auf. Dadurch ist die Vorkammer einfach und preiswert herzustellen.

Gemäß einer weiteren Ausgestaltung der vorliegenden Erfindung ist auf der der Vorkammer gegenüberliegenden Seite des Arbeitsraums zusätzlich wenigstens eine weitere Vorkammer vorgesehen und mit dem Außenrad drehfest verbunden, deren radial äußerer Bereich über einen Zulaufkanal und deren radial innerer Bereich über einen Rücklaufkanal mit dem Arbeitsraum verbunden sind. Dabei sind die Zulaufkanäle der auf den gegenüberliegenden Seiten des Arbeitsraums liegenden Vorkammern radial zueinander beabstandet und/oder weisen unterschiedlich große Strömungsquerschnitte auf.

Im Fall der radial zueinander beabstandeten Zulaufkanäle verhält sich das Vorkammersystem aus wenigstens zwei sich gegenüberliegenden Vorkammern genauso, wie eine volumenmäßig gleich große Vorkammer mit radial zueinander beabstandeten Zulaufkanälen. Im Betrieb wird die Arbeitsflüssigkeit aufgrund der einwirkenden Zentrifugalkräfte an die radialen Außenwände der Vorkammern gedrückt. Zu Beginn liegt der Flüssigkeitspegel in beiden Vorkammern oberhalb der Zulaufkanäle, so dass die Arbeitsflüssigkeit über beide Zulaufkanäle in den Arbeitsraum strömt. Wenn der Flüssigkeitspegel in einer der beiden Vorkammern unterhalb des radial inneren Zulaufkanals des Vorkammersystems sinkt, strömt die Arbeitsflüssigkeit nur noch über den radial äußeren Zulaufkanal der anderen Vorkammer in den Arbeitsraum. Es ergibt sich somit im Anfahrzustand ein hoher Volumenstrom der Arbeitsflüssigkeit von den Vorkammern in den Arbeitsraum, der im Betrieb mit sinkendem Flüssigkeitspegel in den Vorkammern abfällt.

Alternativ oder zusätzlich ist der Volumenstrom von den Vorkammern in den Arbeitsraum durch die Wahl unterschiedlicher Strömungsquerschnitte der Zulaufkanäle bestimmbar. Ein Vorkammersystem mit zwei sich gegenüberliegenden Vorkammern verhält sich dabei genauso, wie eine Vorkammer mit mehreren Zulaufkanälen. Der Flüssigkeitspegel in einer Vorkammer mit einem großen Strömungsquerschnitt des Zulaufkanals sinkt im Vergleich zu einer volumenmäßig gleich großen Vorkammer mit einem kleinen Strömungsquerschnitt deutlich schneller ab. Zu Beginn liegt der Flüssigkeitspegel in beiden Vorkammern oberhalb der Zulaufkanäle, so dass die Arbeitsflüssigkeit über beide Zulaufkanäle in den Arbeitsraum strömt. Sobald der Flüssigkeitspegel in der Vorkammer mit dem größeren Zulaufkanalquerschnitt unterhalb des Zulaufkanals sinkt, strömt die Arbeitsflüssigkeit nur noch über den Zulaufkanal mit dem kleineren Strömungsquerschnitt der anderen Vorkammer in den Arbeitsraum. Es ergibt sich somit im Anfahrzustand ein hoher Volumenstrom der Arbeitsflüssigkeit von der Vorkammer in den Arbeitsraum, der im Betrieb mit sinkendem Flüssigkeitspegel in den Vorkammern abfällt. Der Verlauf der Drehmomentkennlinie lässt sich durch die Veränderung des Vorkammervolumens und die Wahl der Strömungsquerschnitte der Zulaufkanäle sehr genau bestimmen.

In weiterer Ausgestaltung der Erfindung ist vorgesehen, dass die sich gegenüberliegenden Vorkammern jeweils einen ringförmigen Innenraum aufweisen. Dadurch sind die Vorkammern einfach und preiswert herzustellen.

Hinsichtlich weiterer vorteilhafter Ausgestaltungen der Erfindung wird auf die Unteransprüche sowie die nachfolgende Beschreibung von einem Ausführungsbeispiel unter Bezugnahme auf die beiliegende Zeichnung verwiesen. In der Zeichnung zeigt:
- Figur 1: eine hydrodynamische Kupplung gemäß einer ersten Ausführungsform der vorliegenden Erfindung in einer Querschnittansicht;
- Figur 2: in vergrößerter Darstellung eine Vorkammer der hydrodynamischen Kupplung aus Figur 1 mit einem hohen Füllstand;
- Figur 3: in vergrößerter Darstellung eine Vorkammer der hydrodynamischen Kupplung aus Figur 1 mit einem niedrigen Füllstand;
- Figur 4: ein Diagramm eines Sekundärkennfelds der hydrodynamischen Kupplung aus Figur 1;
- Figur 5: eine hydrodynamische Kupplung gemäß einer zweiten Ausführungsform der vorliegenden Erfindung in einer Querschnittansicht;
- Figur 6: in vergrößerter Darstellung eine Vorkammer der hydrodynamischen Kupplung aus Figur 4 mit einem hohen Füllstand;
- Figur 7: in vergrößerter Darstellung eine Vorkammer der hydrodynamischen Kupplung aus Figur 4 mit einem niedrigen Füllstand;
- Figur 8: eine hydrodynamische Kupplung gemäß einer dritten Ausführungsform der vorliegenden Erfindung in einer Querschnittansicht mit einem hohen Füllstand;
- Figur 9: die hydrodynamische Kupplung aus der Figur 8 in einer Querschnittsansicht mit einem niedrigen Füllstand; und
- Figur 10: eine hydrodynamische Kupplung gemäß einer vierten Ausführungsform der vorliegenden Erfindung in einer Querschnittansicht.

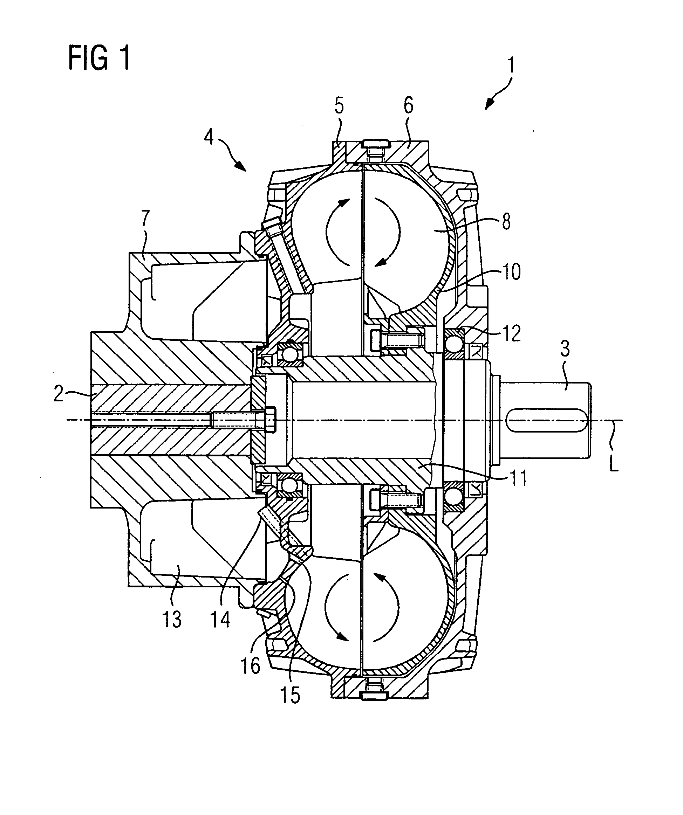

In der Figur 1 ist eine hydrodynamische Kupplung 1 gemäß einer ersten Ausführungsform der vorliegenden Erfindung dargestellt. Die hydrodynamische Kupplung 1 dient zur Übertragung eines Drehmoments von einer Antriebswelle 2 auf eine Abtriebswelle 3. In an sich bekannter Weise gehört zu der hydrodynamischen Kupplung 1 ein um eine Drehachse L rotierbar angeordnetes Gehäuse 4, das aus einem Außenrad 5 mit radialen Schaufeln, einer Schale 6 und einem Vorkammergehäuse 7 besteht. Das Außenrad 5 ist mit einer Antriebswelle 2 drehfest verbunden und arbeitet als Pumpenrad. Zusammen mit der Schale 6 definiert es einen torusförmigen Arbeitsraum 8, der teilweise mit einer öl- oder wasserhaltigen Arbeitsflüssigkeit 9 gefüllt ist. Innerhalb des Arbeitsraums 8 ist ein Innenrad 10 mit radial gerichteten Schaufeln angeordnet, das mit einer koaxial zu der Antriebswelle 2 gelagerten Abtriebswelle 3 über eine Nabe 11 drehfest verbunden ist und als Turbinenrad arbeitet. Auf der Nabe 11 des Turbinenrads 10 stützt sich das Gehäuse 4 über Wälzlager 12 ab.

In dem Gehäuse 4 ist antriebsseitig eine ringförmige Vorkammer 13 ausgebildet, die in einem radial inneren Bereich über einen Rücklaufkanal 14 und in einem radial äußeren Bereich über zwei radial zueinander beabstandete Zulaufkanäle 15, 16 mit dem Arbeitsraum 8 verbunden ist. Der radial innere Zulaufkanal 15 weist einen größeren Strömungsquerschnitt als der radial äußere Zulaufkanal 16 auf. Die Strömungsquerschnitte der Zulaufkanäle 15, 16 sind hier rund, sie können grundsätzlich aber jede geometrische Form annehmen und insbesondere rechteckig oder konusförmig ausgebildet sein.

In der Zeichnung nicht erkennbar ist, dass die Vorkammer 13 über weitere Zulaufkanäle mit dem Arbeitsraum 8 verbunden sein kann.

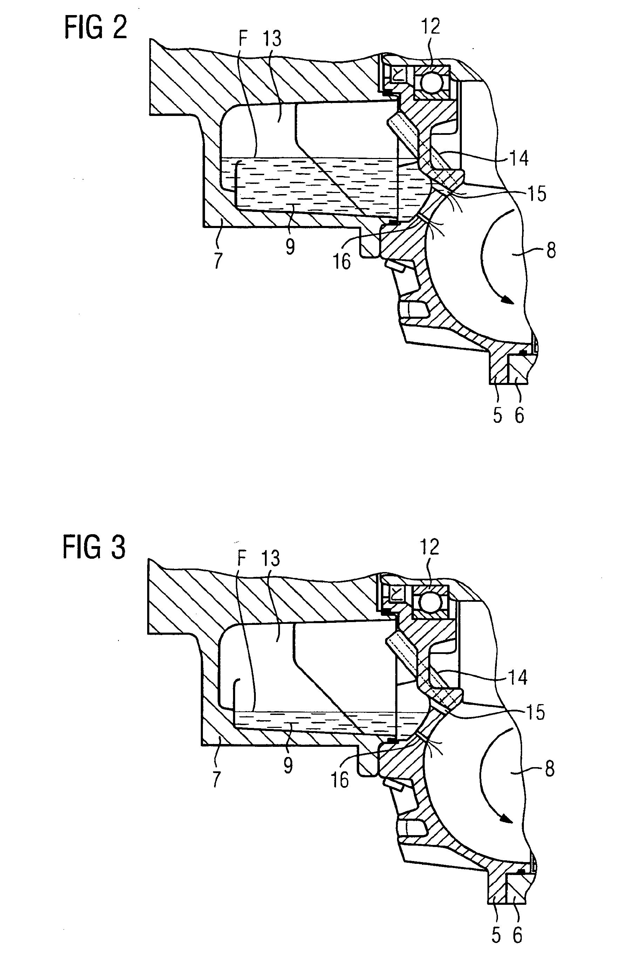

Im Stillstand füllt die Arbeitsflüssigkeit 9 den unteren Bereich des Arbeitsraums 8 sowie den unteren Bereich der Vorkammer 13. In der Figur 2 ist ein Flüssigkeitspegel in der Vorkammer 13 durch die Linie F angedeutet, der je nach Füllgrad FG der hydrodynamischen Kupplung 1 variieren kann. Dabei bezeichnet der Füllgrad FG das Verhältnis von Gesamtvolumen der hydrodynamischen Kupplung 1 und Volumen der eingefüllten Arbeitsflüssigkeit 9.

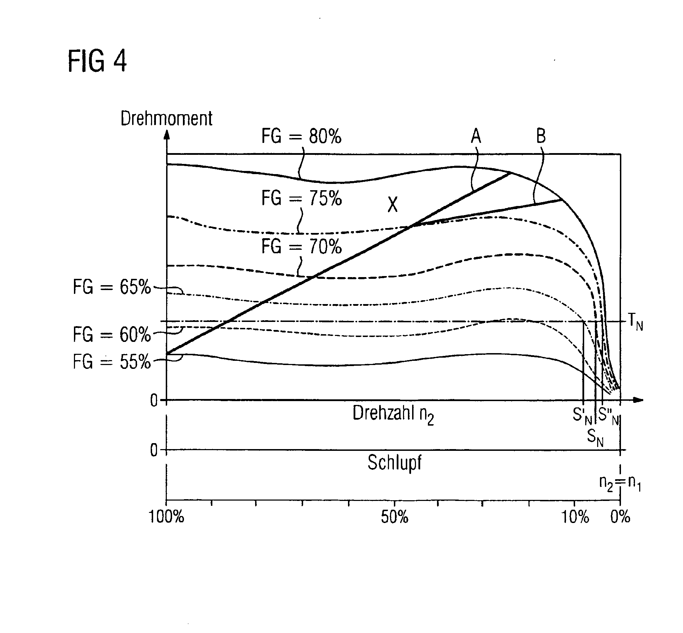

Über die Antriebswelle 2 wird das Pumpenrad 5 in Rotation versetzt, wodurch die Arbeitsflüssigkeit 9 aufgrund der Zentrifugalkräfte an die radialen Außenwände des Arbeitsraums 8 und der Vorkammer 13 gedrückt wird. In der Figur 2 ist erkennbar, dass im Anfahrzustand der hydrodynamischen Kupplung 1 die Vorkammer 13 einen im Vergleich zum Stillstand nahezu unverändert hohen Flüssigkeitspegel F aufweist. Die kleinen Strömungsquerschnitte der Zulaufkanäle 15, 16 wirken als Drossel, so dass die Arbeitsflüssigkeit 9 verzögert von der Vorkammer 13 über die Zulaufkanäle 15, 16 in den Arbeitsraum 8 strömt. Aufgrund der geringen Füllmenge der Arbeitsflüssigkeit 9 in dem Arbeitsraum 8 im Anfahrzustand fährt die hydrodynamische Kupplung 1, wie in der Figur 4 dargestellt, mit einem niedrigen Anfahrdrehmoment an.

Solange der Flüssigkeitspegel F der Arbeitsflüssigkeit 9 in der Vorkammer 13 oberhalb der beiden Zulaufkanäle 15, 16 liegt, strömt die Arbeitsflüssigkeit 9 von der Vorkammer 13 über beide Zulaufkanäle 15, 16 in den Arbeitsraum 8. In Folge dessen steigt das Drehmoment, wie in der Figur 4 dargestellt, bis zum Erreichen des Punktes X an.

Wenn der Flüssigkeitspegel F in der Vorkammer 13 unterhalb des radial inneren Zulaufkanal 15 fällt, strömt die Arbeitsflüssigkeit 9 von der Vorkammer 13 nur noch über den radial äußeren Zulaufkanal 16 in den Arbeitsraum 8. Durch das verminderte Nachspeiseverhalten der Vorkammer 13 flacht die Drehmomentkennlinie, wie in der Figur 4 dargestellt, ab. Die hydrodynamische Kupplung 1 erreicht im Vergleich zu einem Maximaldrehmoment A einer vorbekannten hydrodynamischen Kupplung mit einer Vorkammer ohne radial zueinander beabstandete Zulaufkanäle ein niedrigeres Maximaldrehmoment B. Somit kann beispielsweise die Lebensdauer eines angeschlossenen Förderbands erhöht werden oder das Förderband kann schwächer dimensioniertes bzw. leichter ausgelegt werden, um es günstiger herzustellen.

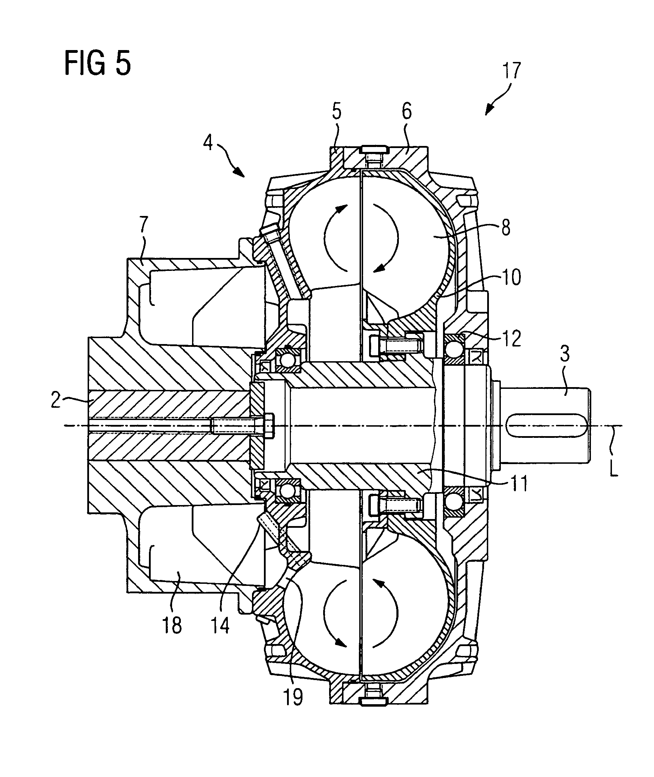

In der Figur 5 ist eine hydrodynamische Kupplung 17 gemäß einer zweiten Ausführungsform der vorliegenden Erfindung dargestellt. Der Aufbau der hydrodynamischen Kupplung 17 entspricht dem allgemeinen Aufbau der hydrodynamischen Kupplung aus der Figur 1. Im Unterschied zu der ersten Ausführungsform ist die Vorkammer 18 der zweiten Ausführungsform nicht über zwei radial zueinander beabstandete Zulaufkanäle sondern über einen radial verlaufenden und schlitzförmig ausgebildeten Zulaufkanal 19 mit dem Arbeitsraum 8 verbunden, dessen Breite mit abnehmendem Abstand zu der Drehachse L kontinuierlich zunimmt.

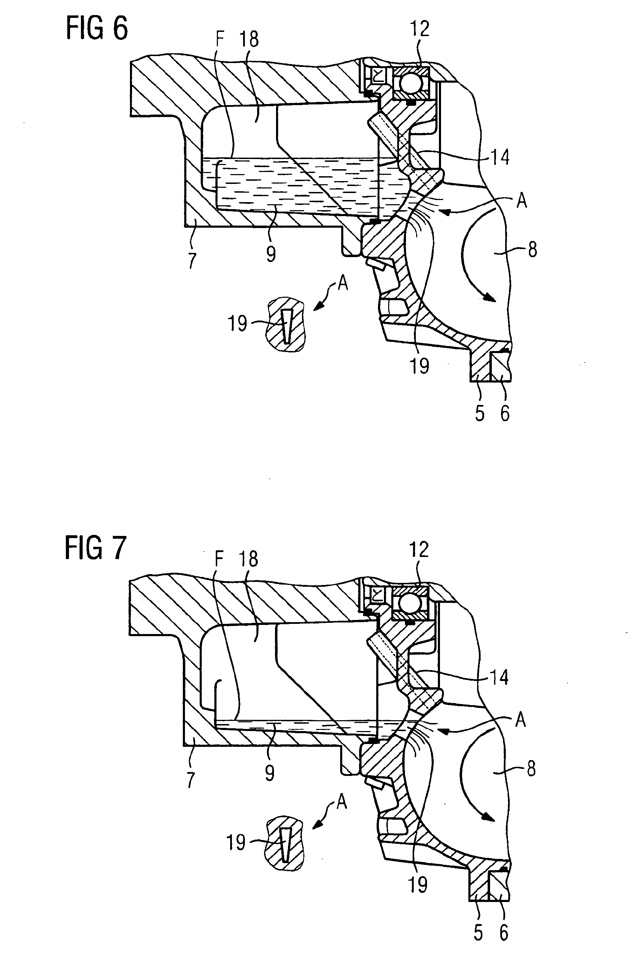

Solange der Flüssigkeitspegel F der Arbeitsflüssigkeit 9 in der Vorkammer 18, wie in der Figur 6 dargestellt, oberhalb des Zulaufkanals 19 liegt, strömt die Arbeitsflüssigkeit 9 von der Vorkammer 18 über den Zulaufkanal 19 in den Arbeitsraum 8. Analog zu der ersten Ausführungsform gemäß Figur 1 steigt das Drehmoment bis zum Erreichen des Punktes X an.

Wenn die Arbeitsflüssigkeit 9 in der Vorkammer 18 den Zulaufkanal 19 nur noch teilweise bedeckt, verringert sich der Volumenstrom der Arbeitsflüssigkeit 9 von der Vorkammer 18 in den Arbeitsraum 8. In der Figur 7 ist erkennbar, dass sich mit weiter sinkendem Flüssigkeitspegel F der durchströmte Teil des schlitzförmig ausgebildeten Zulaufkanals 19 vermindert, so dass der Volumenstrom kontinuierlich abnimmt. Dadurch erhöht sich die Drosselwirkung des Zulaufkanals 19 und die Drehmomentkennlinie flacht in analoger Weise zu der ersten Ausführungsform gemäß Figur 4 ab.

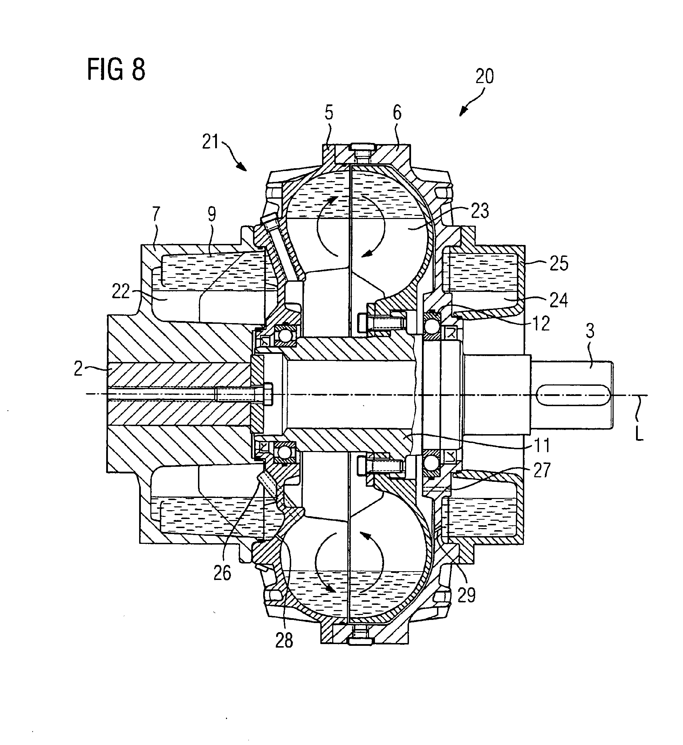

In der Figur 8 ist eine hydrodynamische Kupplung 20 gemäß einer dritten Ausführungsform der vorliegenden Erfindung dargestellt. Der Aufbau der hydrodynamischen Kupplung 20 entspricht dem allgemeinen Grundaufbau der hydrodynamischen Kupplung 1 aus der Figur 1. Im Unterschied zu der ersten Ausführungsform weist die dritte Ausführungsform in einem Gehäuse 21 zusätzlich zu einer Vorkammer 22 auf der der Vorkammer 22 gegenüberliegenden Seite eines Arbeitsraums 23 eine weitere, volumenmäßig kleinere Vorkammer 24 auf. Beide Vorkammern 22, 24 sind in dem Gehäuse 21, das um eine Drehachse L rotierbar angeordnet ist und zusätzlich zu dem Außenrad 5, der Schale 6 und dem Vorkammergehäuse 7 aus einer Außenschale 25 besteht, angeordnet und drehfest mit dem Außenrad 5 verbunden.

Die Vorkammern 22, 24 sind jeweils in einem radial inneren Bereich über einen Rücklaufkanal 26, 27 und in einem radial äußeren Bereich über einen Zulaufkanal 28, 29 mit dem Arbeitsraum 23 verbunden. Beide Zulaufkanäle 28, 29 weisen die gleichen Strömungsquerschnitte auf, wobei der Zulaufkanal 28 radial weiter außenliegend als der Zulaufkanal 29 angeordnet ist.

Im Betrieb verhält sich das Vorkammersystem aus den zwei sich gegenüberliegenden Vorkammern 22, 24 mit radial zueinander beabstandeten Zulaufkanälen 28, 29 genauso, wie eine volumenmäßig gleich große Vorkammer 13 gemäß der ersten Ausführungsform der vorliegenden Erfindung. Solange der Flüssigkeitspegel F der Arbeitsflüssigkeit 9 in den Vorkammer 22, 24, wie in der Figur 8 dargestellt, oberhalb der radial zueinander beabstandeten Zulaufkanäle 28, 29 liegt, strömt die Arbeitsflüssigkeit 9 von beiden Vorkammern 22, 24 über die Zulaufkanäle 28, 29 in den Arbeitsraum 23.

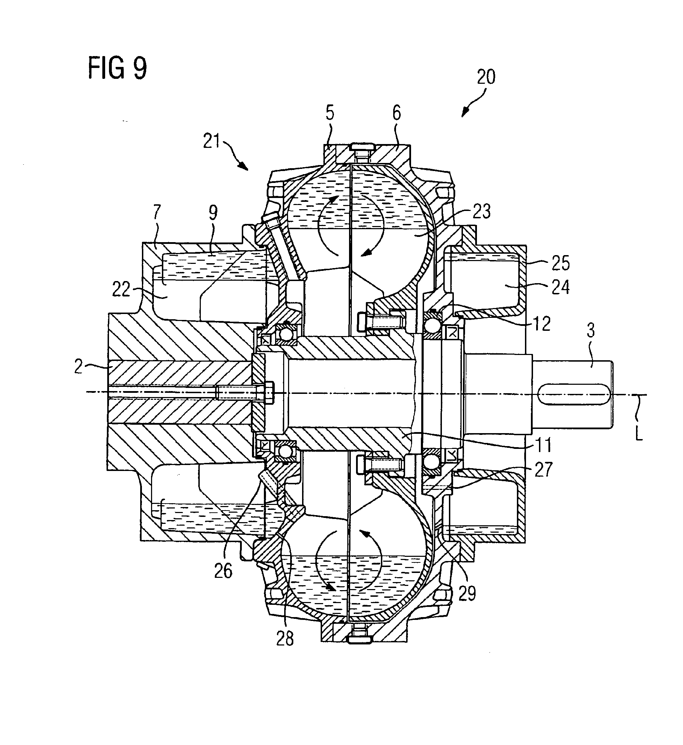

Wenn die Arbeitsflüssigkeit 9 unterhalb des radial weiter innenliegenden Zulaufkanals 29 der weiteren Vorkammer 24 fällt, strömt die Arbeitsflüssigkeit 9, wie in der Figur 9 dargestellt, nur noch von der Vorkammer 22 über den radial weiter außenliegenden Zulaufkanal 28 in den Arbeitsraum 23.

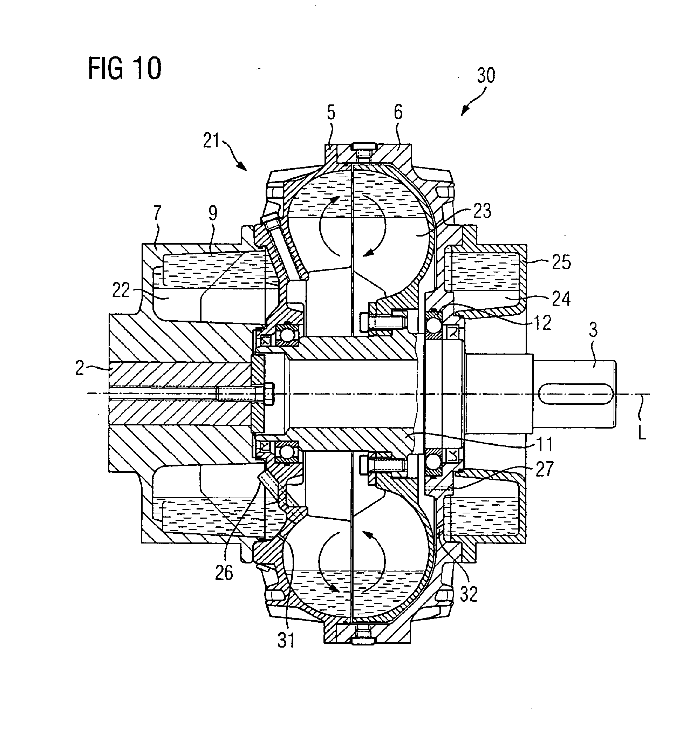

In der Figur 10 ist eine hydrodynamische Kupplung 30 gemäß einer vierten Ausführungsform der vorliegenden Erfindung dargestellt. Der Aufbau der hydrodynamischen Kupplung 30 entspricht dem allgemeinen Grundaufbau der hydrodynamischen Kupplung 20 aus der Figur 8. Im Unterschied zu der dritten Ausführungsform sind in der vierten Ausführungsform die sich gegenüberliegenden Zulaufkanäle 28, 29 der beiden Vorkammern 22, 24 nicht radial zueinander beabstandet sondern sind in einem gleichen Abstand zu der Drehachse L angeordnet. Allerdings weist der Zulaufkanal 31 der Vorkammer 22 einen kleineren Strömungsquerschnitt als der gegenüberliegende Zulaufkanal 32 der weiteren Vorkammer 24 auf.

Im Betrieb verhält sich das Vorkammersystem aus den zwei sich gegenüberliegenden Vorkammern 22, 24 genauso, wie eine volumenmäßig gleich große Vorkammer 13 gemäß der ersten Ausführungsform der vorliegenden Erfindung. In der Figur 10 ist erkennbar, dass der Flüssigkeitspegel F der Arbeitsflüssigkeit 9 in der weiteren Vorkammer 24 aufgrund des größeren Strömungsquerschnitts des Zulaufkanals 32 und des geringen Volumens deutlich schneller als in der Vorkammer 22 sinkt. Wenn der Flüssigkeitspegel F der Arbeitsflüssigkeit 9 in der weiteren Vorkammer 24 unterhalb des Zulaufkanals 32 fällt, strömt die Arbeitsflüssigkeit 9 nur noch von der Vorkammer 22 über den Zulaufkanal 31 in den Arbeitsraum 23. Durch das verminderte Nachspeiseverhalten flacht die Drehmomentkennlinie in analoger Weise zu der ersten Ausführungsform gemäß Figur 4 ab.

Anstatt der vorbeschriebenen Ausführungsformen mit einem Außenradantrieb kann auch das Innenrad 10 in analoger Weise angetrieben werden.

In der Zeichnung ist nicht erkennbar, dass zusätzlich zu dem Außen- und dem Innenrad 5, 10 ein Leitrad vorgesehen sein kann, um einen hydrodynamischen Wandler analog zu betreiben.

## Patentansprüche

1. Hydrodynamische Kupplung (1, 17) mit einem beschaufelten Außenrad (5) und einer Schale (6), die miteinander einen Arbeitsraum (8) bilden und um eine Drehachse (L) gemeinsam rotierbar angeordnet sind, einem innerhalb des Arbeitsraums (8) vorgesehenen beschaufelten Innenrad (10), das relativ zu dem Außenrad (5) und der Schale (6) rotierbar um die Drehachse (L) angeordnet ist, sowie wenigstens einer Vorkammer (13, 18), die drehfest mit dem Außenrad (5) verbunden ist, wobei ein radial äußerer Bereich der Vorkammer (13, 18) über einen Zulaufkanal (16, 19) und ein radial innerer Bereich der Vorkammer (13, 18) über einen Rücklaufkanal (14) mit dem Arbeitsraum (8) verbunden sind, **dadurch gekennzeichnet, dass** die wenigstens eine Vorkammer (13, 18) über wenigstens zwei radial zueinander beabstandete Zulaufkanäle (15, 16) und/oder über wenigstens einen im Wesentlichen radial verlaufenden, schlitzförmig ausgebildeten Zulaufkanal (19) mit dem Arbeitsraum (8) verbunden ist.

2. Hydrodynamische Kupplung (1, 17) nach Anspruch 1,
**dadurch gekennzeichnet, dass**
das Außenrad (5) mit einer Antriebswelle (2) und das Innenrad (10) mit einer Abtriebswelle (3) drehfest verbunden sind.

3. Hydrodynamische Kupplung (1, 17) nach Anspruch 1 oder 2,
**dadurch gekennzeichnet, dass**
radial zueinander beabstandete Zulaufkanäle (15, 16) vorgesehen sind, wobei jeweils ein radial weiter innenliegender Zulaufkanal (15) einen größeren Strömungsquerschnitt als ein radial weiter außenliegender Zulaufkanal (16) aufweist.

4. Hydrodynamische Kupplung (1, 17) nach Anspruch 1 oder 2,
**dadurch gekennzeichnet, dass**
ein schlitzförmig ausgebildeter Zulaufkanal (19) vorgesehen ist, bei dem das Verhältnis zwischen Höhe und mittlerer Breite 4:1 oder mehr beträgt.

5. Hydrodynamische Kupplung (1, 17) nach Anspruch 4,
**dadurch gekennzeichnet, dass**
der wenigstens eine schlitzförmig ausgebildete Zulaufkanal (19) eine variable Breite aufweist.

6. Hydrodynamische Kupplung (1, 17) nach Anspruch 5,
**dadurch gekennzeichnet, dass**
die Breite des wenigstens einen schlitzförmigen Zulaufkanals (19) mit abnehmendem Abstand zu der Drehachse (L) zunimmt.

7. Hydrodynamische Kupplung (1, 17) nach Anspruch 6,
**dadurch gekennzeichnet, dass**
die Breite des wenigstens einen schlitzförmigen Zulaufkanals (19) mit abnehmendem Abstand zu der Drehachse (L) kontinuierlich zunimmt.

8. Hydrodynamische Kupplung (1, 17) nach einem der vorherigen Ansprüche,
**dadurch gekennzeichnet, dass**
die wenigstens eine Vorkammer (13, 18) über mehrere Zulaufkanäle mit dem Arbeitsraum verbunden ist, die in einem gleichen Abstand von der Drehachse (L) angeordnet sind.

9. Hydrodynamische Kupplung (1, 17) nach einem der vorherigen Ansprüche,
**dadurch gekennzeichnet, dass**
mehrere in Umfangsrichtung voneinander getrennte Vorkammern vorgesehen sind.

10. Hydrodynamische Kupplung (1, 17) nach einem der Ansprüche 1 bis 8,
**dadurch gekennzeichnet, dass**
die Vorkammer (13, 18) einen ringförmigen Innenraum aufweist.

11. Hydrodynamische Kupplung (20, 30) mit einem beschaufelten Außenrad (5) und einer Schale (6), die miteinander einen Arbeitsraum (23) bilden und um eine Drehachse (L) gemeinsam rotierbar angeordnet sind, einem innerhalb des Arbeitsraums (23) vorgesehenen beschaufelten Innenrad (10), das relativ zu dem Außenrad (5) und der Schale (6) rotierbar um die Drehachse (L) angeordnet ist, sowie wenigstens einer Vorkammer (22), die drehfest mit dem Außenrad (5) verbunden ist, wobei ein radial äußerer Bereich der Vorkammer (22) über einen Zulaufkanal (28, 31) und ein radial innerer Bereich der Vorkammer (22) über einen Rücklaufkanal (26) mit dem Arbeitsraum (23) verbunden sind, insbesondere nach einem der Ansprüche 1 bis 10, **dadurch gekennzeichnet, dass** auf der der Vorkammer (22) gegenüberliegenden Seite des Arbeitsraums (23) zusätzlich wenigstens eine weitere Vorkammer (24) vorgesehen und mit dem Außenrad (5) drehfest verbunden ist, dessen radial äußerer Bereich über einen Zulaufkanal (29, 32) und dessen radial innerer Bereich über einen Rücklaufkanal (27) mit dem Arbeitsraum (23) verbunden sind, und dass die Zulaufkanäle (28, 31, 29, 32) der auf den gegenüberliegenden Seiten des Arbeitsraums (23) liegenden Vorkammern (22, 24) radial zueinander beabstandet sind und/oder unterschiedlich große Strömungsquerschnitte aufweisen.

12. Hydrodynamische Kupplung (20, 30) nach Anspruch 11,
**dadurch gekennzeichnet, dass**
die sich gegenüberliegenden Vorkammern (22, 24) jeweils einen ringförmigen Innenraum aufweisen.

## Claims

1. Hydrodynamic coupling (1, 17) having a bladed outer wheel (5) and a shell (6) which together form a working chamber (8) and are arranged so as to be co-rotatable about an axis of rotation (L), a bladed inner wheel (10) which is provided inside the working chamber (8) and which is arranged relative to the outer wheel (5) and the shell (6) so as to be rotatable about the axis of rotation (L), and at least one prechamber (13, 18) which is connected in a rotatably fixed manner to the outer wheel (5), wherein a radially outer region of the prechamber (13, 18) is connected to the working chamber (8) via an inlet channel (16, 19) and a radially inner region of the prechamber (13, 18) is connected to the working chamber (8) via a return channel (14),
**characterised in that** the at least one prechamber (13, 18) is connected to the working chamber (8) via at least two inlet channels (15, 16) spaced radially apart from each other and/or via at least one substantially radially extending inlet channel (19) embodied in a groove shape.

2. Hydrodynamic coupling (1, 17) according to claim 1,
**characterised in that**
the outer wheel (5) is connected in a rotatably fixed manner to a drive shaft (2) and the inner wheel (10) is connected in a rotatably fixed manner to a driven shaft (3).

3. Hydrodynamic coupling (1, 17) according to claim 1 or 2,
**characterised in that**
inlet channels (15, 16) spaced radially apart from each other are provided, with an inlet channel (15) disposed radially further inwards having a larger flow cross-section than an inlet channel (16) disposed radially further outwards.

4. Hydrodynamic coupling (1, 17) according to claim 1 or 2,
**characterised in that**
an inlet channel (19) embodied in a groove shape is provided in which the ratio between height and average width is equal to or greater than 4:1.

5. Hydrodynamic coupling (1, 17) according to claim 4,
**characterised in that**
the at least one inlet channel (19) embodied in a groove shape has a variable width.

6. Hydrodynamic coupling (1, 17) according to claim 5,
**characterised in that**
the width of the at least one groove-shaped inlet channel (19) increases as the distance to the axis of rotation (L) decreases.

7. Hydrodynamic coupling (1, 17) according to claim 6,
**characterised in that**
the width of the at least one groove-shaped inlet channel (19) increases continuously as the distance to the axis of rotation (L) decreases.

8. Hydrodynamic coupling (1, 17) according to one of the preceding claims,
**characterised in that**
the at least one prechamber (13, 18) is connected to the working chamber via a plurality of inlet channels which are arranged equidistantly from the axis of rotation (L).

9. Hydrodynamic coupling (1, 17) according to one of the preceding claims,
**characterised in that**
a plurality of prechambers separated from one another in the circumferential direction are provided.

10. Hydrodynamic coupling (1, 17) according to one of the claims 1 to 8,
**characterised in that**
the prechamber (13, 18) has an annular internal space.

11. Hydrodynamic coupling (20, 30) having a bladed outer wheel (5) and a shell (6) which together form a working chamber (23) and are arranged so as to be co-rotatable about an axis of rotation (L), a bladed inner wheel (10) which is provided inside the working chamber (23) and which is arranged relative to the outer wheel (5) and the shell (6) so as to be rotatable about the axis of rotation (L), and at least one prechamber (22) which is connected in a rotatably fixed manner to the outer wheel (5), wherein a radially outer region of the prechamber (22) is connected to the working chamber (23) via an inlet channel (28, 31) and a radially inner region of the prechamber (22) is connected to the working chamber (23) via a return channel (26), in particular according to one of claims 1 to 10, **characterised in that** in addition at least one further prechamber (24) is provided on the side of the working chamber (23) disposed opposite the prechamber (22) and is connected in a rotatably fixed manner to the outer wheel (5), the radially outer region of which is connected to the working chamber (23) via an inlet channel (29, 32) and the radially inner region of which is connected to the working chamber (23) via a return channel (27), and **in that** the inlet channels (28, 31, 29, 32) of the prechambers (22, 24) disposed on the opposite sides of the working chamber (23) are spaced radially apart from one another and/or have flow cross-sections of different size.

12. Hydrodynamic coupling (20, 30) according to claim 11,
**characterised in that**
the prechambers (22, 24) disposed opposite one another each have an annular internal space.

## Revendications

1. Embrayage (1,17) hydrodynamique ayant une roue (5) extérieure à aubes et une coquille (6) qui forment ensemble un espace (8) de travail et qui sont montées tournantes conjointement autour d'un axe (L) de rotation, une roue (10) intérieure à aubes prévue à l'intérieure de l'espace (8) de travail, qui est montée tournante autour de l'axe (L) de rotation par rapport à la roue (5) extérieure et à la coquille (6), ainsi qu'au moins une antichambre (13,18) qui est solidaire en rotation de la roue (5) extérieure, une partie extérieure radialement de l'antichambre (13,18) communiquant par un canal (16,19) d'accès avec l'espace (8) de travail et une partie intérieure radialement de l'antichambre (13,18) communiquant avec l'espace (8) de travail par un canal (14) de retour, **caractérisé en ce que** la au moins une antichambre (13,18) communique avec l'espace (8) de travail par au moins deux canaux (15,16) d'accès à distance radialement l'un de l'autre et/ou par au moins un canal (19) d'accès en forme de fente s'étendant sensiblement radialement.

2. Embrayage (1,17) hydrodynamique suivant la revendication 1,
**caractérisé en ce que**
la roue extérieure est solidaire en rotation d'un arbre (2) d'entrée et la roue (10) intérieure d'un arbre (3) de sortie.

3. Embrayage (1,17) hydrodynamique suivant l'une des revendications 1 ou 2,
**caractérisé en ce que**
il est prévu des canaux (15,16) d'accès à distance les uns des autres radialement, respectivement un canal (15) d'accès plus à l'intérieur radialement ayant une section transversale d'écoulement plus grande qu'un canal (16) d'accès plus à l'extérieur radialement.

4. Embrayage (1,17) hydrodynamique suivant l'une des revendications 1 ou 2,
**caractérisé en ce que**
il est prévu un canal (19) d'accès en forme de fente, dans lequel le rapport entre la hauteur et la largeur au milieu est supérieur ou égal 4:1.

5. Embrayage (1,17) hydrodynamique suivant la revendication 4,
**caractérisé en ce que**
le au moins un canal (19) d'accès en forme de fente a une largeur variable.

6. Embrayage (1,17) hydrodynamique suivant la revendication 5,
**caractérisé en ce que**
la largeur du au moins un canal (19) d'accès en forme de fente augmente au fur et à mesure que diminue la distance à l'axe (L) de rotation.

7. Embrayage (1,17) hydrodynamique suivant la revendication 6,
**caractérisé en ce que**
la largeur du au moins un canal(19) d'accès en forme de fente augmente d'une manière continue au fur et à mesure que diminue la distance à l'axe (L) de rotation.

8. Embrayage (1,17) hydrodynamique suivant l'une des revendications précédentes,
**caractérisé en ce que**
la au moins une antichambre (13,18) communique avec l'espace de travail par plusieurs canaux d'accès qui sont disposés à une même distance de l'axe (L) de rotation.

9. Embrayage (1,17) hydrodynamique suivant l'une des revendications précédentes,
**caractérisé en ce que**
il est prévu plusieurs antichambres distinctes les unes des autres dans la direction périphérique.

10. Embrayage (1,17) hydrodynamique suivant l'une des revendications 1 ou 8,
**caractérisé en ce que**
l'antichambre (13,18) a un espace intérieur annulaire.

11. Embrayage (20,30) hydrodynamique comprenant une roue (5) extérieure à aubes et une coquille (6) qui forment ensemble un espace (23) de travail et qui sont montées tournantes conjointement autour d'un axe (L) de rotation, une roue (10) intérieure à aubes prévue à l'intérieure de l'espace (23) de travail qui est montée tournante autour de l'axe (L) de rotation par rapport à la roue (5) extérieure et à la coquille (6), ainsi qu'au moins une antichambre (22) qui est solidaire en rotation de la roue (5) extérieure, une partie extérieure radialement de l'antichambre (22) communiquant par un canal (28,31) d'accès avec l'espace (23) de travail et une partie intérieure radialement de l'antichambre (22) communiquant avec l'espace (23) de travail par un canal (26) de retour, notamment suivant l'une des revendications 1 à 10, **caractérisé en ce que**, du côté de l'espace (23) de travail opposé à l'antichambre (22), est prévu, en outre, au moins une autre antichambre (24) qui est solidaire en rotation de la roue (5) extérieure, dont la partie extérieure radialement communique par un canal (29,32) d'accès avec l'espace (23) de travail et dont la partie intérieure radialement communique, par un canal (27) de retour, avec l'espace (23) de travail et **en ce que** les canaux (28,31,29,32) d'accès des antichambres (22,24), se trouvant sur les côtés opposés de l'espace (23) de travail, sont à distance radialement les uns des autres et/ou ont des sections transversales d'écoulement de dimensions différentes.

12. Embrayage (1,17) hydrodynamique suivant la revendication 11,
**caractérisé en ce que**
les antichambres (22,24) opposées ont respectivement un espace intérieur annulaire.
